Europäisches Patentamt

European Patent Office

Office européen des brevets

(11) Veröffentlichungsnummer: **0 262 605 B1**

(12) **EUROPÄISCHE PATENTSCHRIFT**

(45) Veröffentlichungstag der Patentschrift: **21.11.91**

(51) Int. Cl.⁵: **G11B** 20/10, G11B 5/03

(21) Anmeldenummer: **87114038.0**

(22) Anmeldetag: **25.09.87**

(54) **Verfahren und Anordnung zum Aufzeichnen von digitalen Daten auf einen magnetischen Aufzeichnungsträger.**

(30) Priorität: **30.09.86 DE 3633269**

(43) Veröffentlichungstag der Anmeldung:
**06.04.88 Patentblatt 88/14**

(45) Bekanntmachung des Hinweises auf die
Patenterteilung:
**21.11.91 Patentblatt 91/47**

(84) Benannte Vertragsstaaten:
**DE GB**

(56) Entgegenhaltungen:
EP-A- 0 080 575          DE-A- 3 233 489
GB-A- 2 054 242          GB-A- 2 055 238
US-A- 4 202 017          US-A- 4 420 776

(73) Patentinhaber: **TANDBERG DATA A/S
Kjelsasveien 161 Postboks 9 Korsvoll
N-0808 Oslo 8(NO)**

(72) Erfinder: **Solhjell, Erik
Konvallveien 30
N-0855 Oslo 8(NO)**

(74) Vertreter: **Goddar, Heinz J., Dr. et al
FORRESTER & BOEHMERT Widenmayerstrasse 4/I
W-8000 München 22(DE)**

**Beschreibung**

Die Erfindung bezieht sich auf ein Verfahren zum Aufzeichnen von digitalen Daten auf einen magnetischen Aufzeichnungsträger gemäß dem Oberbegriff des Patentanspruchs 1. Weiterhin bezieht sich die Erfindung auf eine Anordnung zur Durchführung des Verfahrens gemäß dem Oberbegriff des Patentanspruchs 6.

Es ist bereits allgemein bekannt, bei einer Aufzeichnung von digitalen Daten auf einen magnetischen Aufzeichnungsträger, wie beispielsweise eine Magnetplatte oder ein Magnetband hochfrequente Vormagnetisierungssignale zu verwenden, die den Datensignalen überlagert sind und die mit diesen Datensignalen derart synchronisiert sind, daß die Flanken der Datensignale gleichzeitig mit den Flanken der Vormagnetisierungssignale auftreten.

Bei einem aus der DE-OS 32 33 489 bekannten Verfahren sind die Richtungen der Flanken der Datensignale entweder gleich oder entgegengesetzt den Richtungen der gleichzeitig auftretenden Vormagnetisierungssignale. Wenn eine Flanke eines Datensignals in Phase mit der Flanke eines zugehörigen Vormagnetisierungssignals ist, tritt bei der Wiedergabe des aufgezeichneten Signals gegebenenfalls nur eine geringe Verschiebung der Flanken auf, d. h. die Abweichung des Auftretens dieser Flanke von einem erwarteten Auftreten oder Zeitpunkt ist gering. Wenn jedoch die Flanke des Vormagnetisierungssignals eine entgegengesetzte Phase hat, kann ein erheblicher Versatz der Flanke des aufgezeichneten Signals auftreten, wenn die Datensignale zu beiden Seiten der Flanke ungleichen Datenfolgen zugeordnet sind.

Aus der US-PS 4, 420, 776 ist ein verfahren und eine Anordnung zur Durchführung desselben der eingangs genannten Gattungen bekannt, wobei die Vormagnetisierungssignale phasenstarr mit den Datensignalen erzeugt und die Frequenzen der Vormagentisierungssignale derart verändert werden, daß jede Flanke der Datensignale in Phase mit einer Flanke eines zugehörigen Vormagnetisierungssignals ist. Jedoch ist dieses Verfahren verhältnismäßig umständlich und bei einigen Datencodierungen schwierig auszuführen.

Ein weiteres Verfahren beruht auf dem Prinzip, eine Pulsdauer oder Pulsgrenze der Vormagnetisierungssignale zwischen zwei Flanken der Datensignale um die halbe Periodendauer zu verlängern, um die Flanken der Datensignale mit den entsprechenden Flanken der Vormagnetisierungssignale zu synchronisieren. Dies ist ein verhältnismäßig einfaches Verfahren. Wenn jedoch die Frequenz der Vormagnetisierungssignale nicht sehr viel höher ist als die Frequenz der Datensignale, können die fehlenden Flanken der Vormagnetisierungssignale zu einer höheren Störanfälligkeit der aufgezeichneten Signale führen.

Weiterhin ist es möglich, ein Verfahren anzuwenden, das auf der Verwendung eines übergeordneten Vormagnetisierungssignals beruht, dessen Frequenz ein ungeradzahliges Vielfaches der maximalen Frequenz der Datensignale ist. Die Frequenz dieser übergeordneten Vormagnetisierungssignale wird dann durch zwei geteilt, um die Vormagnetisierungssignale zu erzeugen. Bei einem derartigen Verfahren weisen die Vormagnetisierungssignale jedoch einen Gleichspannungsanteil auf, da die Summe der Pulsdauern verschieden ist von der Summe der Pulspausen der Vormagnetisierungssignale. Dieser Gleichspannungsanteil kann in Abhängigkeit von der Art der Codierung, die für die Erzeugung der Datensignale aus den digitalen Daten verwendet wird, ebenfalls einen Flankenversatz der aufgezeichneten Signale bewirken.

Der Erfindung liegt daher die Aufgabe zugrunde, ein Verfahren und eine Anordnung zur Erzeugung von Vormagnetisierungssignalen anzugeben, bei denen die Vormagnetisierungssignale keinen Gleichspannungsanteil enthalten und bei denen die Flanken der Datensignale in Phase mit den Flanken der Vormagnetisierungssignale sind.

Erfindungsgemäß wird die Aufgabe bei dem Verfahren der eingangs genannten Art durch die im kennzeichnenden Teil des Patentanspruchs 1 angegebenen Merkmale gelöst.

Das Verfahren gemäß der Erfindung hat den Vorteil, daß die Flankenverschiebung der aufgezeichneten Signale (Bit-shift) gering ist und damit die aufgezeichneten Daten mit großer Genauigkeit wiedergewonnen werden können.

Es ist vorteilhaft, wenn die zwei aufeinanderfolgenden Flanken von jeweils zwei Vormagnetisierungssignalen innerhalb jedes Datensignals verschoben werden. Zweckmäßigerweise werden die Stellen, an denen die Abstände zwischen den Flanken der Vormagnetisierungssignale verschoben werden, in den Datensignalen gleichmäßig verteilt.

Eine vorteilhafte Ausführungsform einer Anordnung zur Durchführung des Verfahrens enthält eine Steuereinheit, die in Abhängigkeit von den Flanken der Datensignale aus in einem Oszillator erzeugten Taktsignalen die Vormagnetisierungssignale erzeugt. Zweckmäßigerweise ist der Steuereinheit ein Flankendetektor vorgeschaltet, der bei jeder Flanke der Datensignale ein Flankensignal erzeugt und der verzögerte Datensignale an die Steuereinheit abgibt. Die Steuereinheit kann einen Zähler enthalten, der den Abstand zwischen den Zeitpunkten, an denen eine Verschiebung der Flanken der Vormagnetisierungssignale auftritt, festlegt. Zu Beginn und am Ende des Zählvorgangs erfolgt jeweils ein Phasensprung eines Taktsignals, aus dem mittels eines Flipflops die Vormagnetisierungssignale gewonnen werden, die zu den den Phasensprüngen zugeordneten Zeitpunkten jeweils eine zusätzliche Flanke aufweisen.

Das Verfahren gemäß der Erfindung und Ausführungsbeispiele einer Anordnung zur Durchführung des Verfahrens werden im folgenden anhand von Zeichnungen näher erläutert. Es zeigen

FIG 1 ein Zeitdiagramm von Datensignalen und Vormagnetisierungssignalen bei einem ersten bekannten Verfahren,

FIG 2 Zeitdiagramme von Datensignalen und Vormagnetisierungssignalen bei einem zweiten bekannten Verfahren,

FIG 3 Zeitdiagramme von Datensignalen und Vormagnetisierungssignalen bei dem Verfahren gemäß der Erfindung,

FIG 4 ein Blockschaltbild einer Anordnung zur Durchführung des Verfahrens gemäß der Erfindung,

FIG 5 ein Schaltbild einer Anordnung zur Durchführung des Verfahrens und

FIG 6 ein Zeitdiagramm von Signalen an verschiedenen Punkten der Anordnung zur Durchführung des Verfahrens

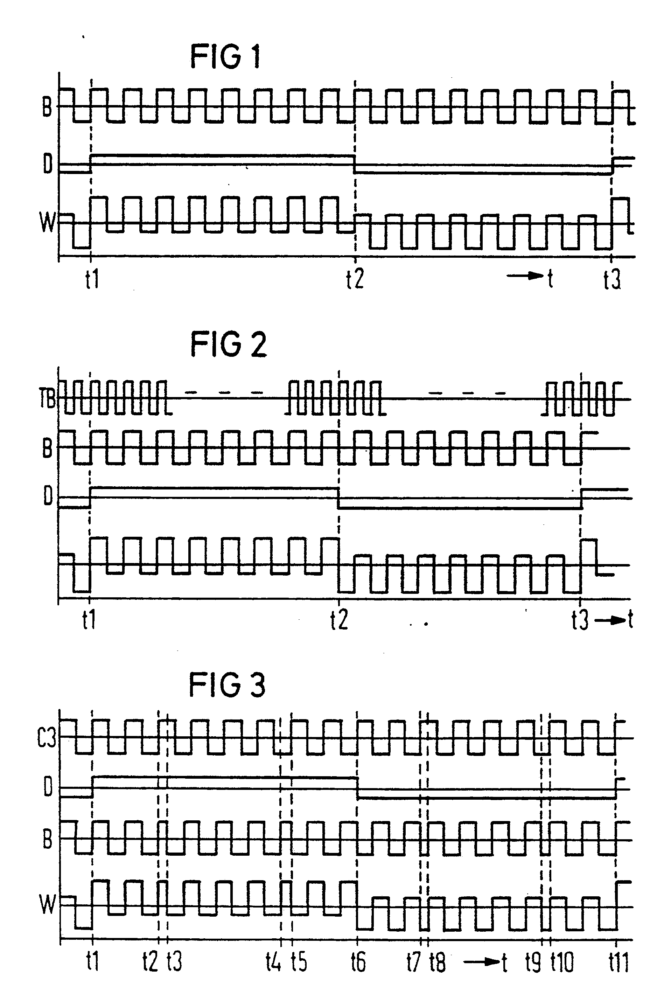

Das in FIG 1 dargestellte Zeitdiagramm zeigt binäre hochfrequente Vormagnetisierungssignale B, die aus Impulsen mit Pulsdauern und Pulspausen gebildet werden. Die Vormagnetisierungssignale B sind mit codierten binären Datensignalen D synchronisiert, die zu den Zeitpunkten t1, t2 und t3 Flanken aufweisen. Die Vormagnetisierungssignale B und die Datensignale D werden überlagert, um Schreibsignale W zu erzeugen, die einem magnetischen Schreibkopf zugeführt werden, um digitale Daten auf einen magnetischen Aufzeichnungsträger, beispielsweise ein Magnetband aufzuzeichnen.

Wie der FIG 1 entnommen werden kann, sind die Vormagnetisierungssignale B und die Datensignale D zu den Zeitpunkten t1 und t3 miteinander in Phase, d. h. die Flanken der Datensignale D und die entsprechenden Flanken der Vormagnetisierungssignale B treten zum selben Zeitpunkt auf und haben dieselbe Richtung, wohingegen zum Zeitpunkt t2 das Vormagnetisierungssignal B und das Datensignal D einander entgegengesetzte Phasen aufweisen, d. h. die Flanken treten zwar zum selben Zeitpunkt auf, haben jedoch einander entgegengesetzte Richtungen.

Wenn die Vormagnetisierungssignale B und die Datensignale D in Phase sind, tritt eine geringe Flankenverschiebung (Bitshift) der aufgezeichneten Signale auf, d. h. eine Verschiebung der Position der Flanken der Magnetisierung auf dem Aufzeichnungsträger, die von den codierten Daten abhängt, ist gering, wohingegen ein bemerkenswerter Flankenversatz auftreten kann, wenn die Vormagnetisierungssignale B und die Datensignale D entgegengesetzte Phasen aufweisen. So tritt bei dem Schreibsignal W zum Zeitpunkt t2 eine resultierende Flanke auf, die eine Stufe aufweist, und damit ist der resultierende Flankenbereich auf dem magnetischen Aufzeichnungsträger ungenau, so daß in Abhängigkeit von den Mustern der Datensignale D zu beiden Seiten der Flanke ein bemerkenswerter Flankenversatz auftreten kann.

Bei dem in FIG 2 dargestellten Zeitdiagramm eines weiteren bekannten Verfahrens werden die Vormagnetisierungssignale B für die Datensignale D unter Verwendung von übergeordneten Vormagnetisierungssignalen TB erzeugt, deren Frequenz ein ungeradzahliges Vielfaches der höchsten vorkommenden Frequenz der Datensignale D ist. die Folgefrequenz der übergeordneten Vormagnetisierungssignale TB wird durch zwei geteilt, um die Vormagnetisierungssignale B zu erzeugen. Diese sind phasenmäßig mit den Datensignalen D zu den Zeitpunkten t1 bis t3 synchronisiert. Die Vormagnetisierungssignale B und die Datensignale D werden wieder einander überlagert, so daß das Schreibsignal W erzeugt wird. Die Anzahl der Pulsdauern der Vormagnetisierungssignale B zwischen zwei Flanken der Datensignale D ist verschieden von der Anzahl der Pulspausen, so daß durch diese Vormagnetisierungssignale zusätzliche Gleichspannungsanteile in den Schreibsignalen W erzeugt werden. Diese zusätzlichen Gleichspannungsanteile können ebenfalls in Abhängigkeit von den aufzuzeichnenden Mustern der Datensignale einen Flankenversatz erzeugen.

Das in FIG 3 dargestellte Zeitdiagramm zeigt Vormagnetisierungssignale B, die derart erzeugt werden, daß ihre Flanken immer in Phase mit den Flanken der Datensignale D sind. Die Vormagnetisierungssignale B und die Datensignale D entsprechen zwischen den Zeitpunkten t1 und t2 den entsprechenden Signalen in FIG 1, wobei das Signal C3 in FIG 3 dem Signal B in FIG 1 entspricht. Zwischen den Zeitpunkten t2 und t3 wird die Pulsdauer, d. h. der Abstand zwischen den Flanken der Taktsignale C3 auf die Hälfte verkürzt, wohingegen die Pulspausen beibehalten werden. Zwischen den Zeitpunkten t4 und t5 wird der Abstand zwischen den Flanken der Taktsignale C3 erneut um die Hälfte verkürzt, so daß zum Zeitpunkt t6 das Vormagnetisierungssignal B gegenüber dem entsprechenden Taktsignal C3 um 180° phasenverschoben ist und damit die Flanke des Vormagnetisierungssignals B zum Zeitpunkt t6 in Phase mit der Flanke des Datensignals D ist. Entsprechendes wird zwischen den Zeitpunkten t7 und t8 sowie t9 und t10 durchgeführt, wobei die Pulspause an zwei Stellen der Vormagnetisierungssignale B zwischen den Flanken der Datensignale D verkürzt wird, so daß zum Zeitpunkt t11 wiederum das Vormagnetisierungssignal B und das Datensignal D in Phase sind.

Bei dem in FIG 3 dargestellten Ausführungsbeispiel des Verfahrens gemäß der Erfindung wurden jeweils zwischen zwei Flanken der Datensignale D an zwei Stellen die Abstände von zwei aufeinanderfolgenden Flanken um jeweils die Hälfte verkürzt. Bei einer Verkürzung an n Stellen um jeweils den n-ten Teil der Pulsdauer bzw. Pulspause wird ebenfalls eine phasenmäßige Synchronisierung zwischen den Vormagnetisierungssignalen B und den Datensignalen D erreicht. Beispielsweise können auch vier Abstände um jeweils ein Viertel der normalen Pulsdauer verkürzt werden.

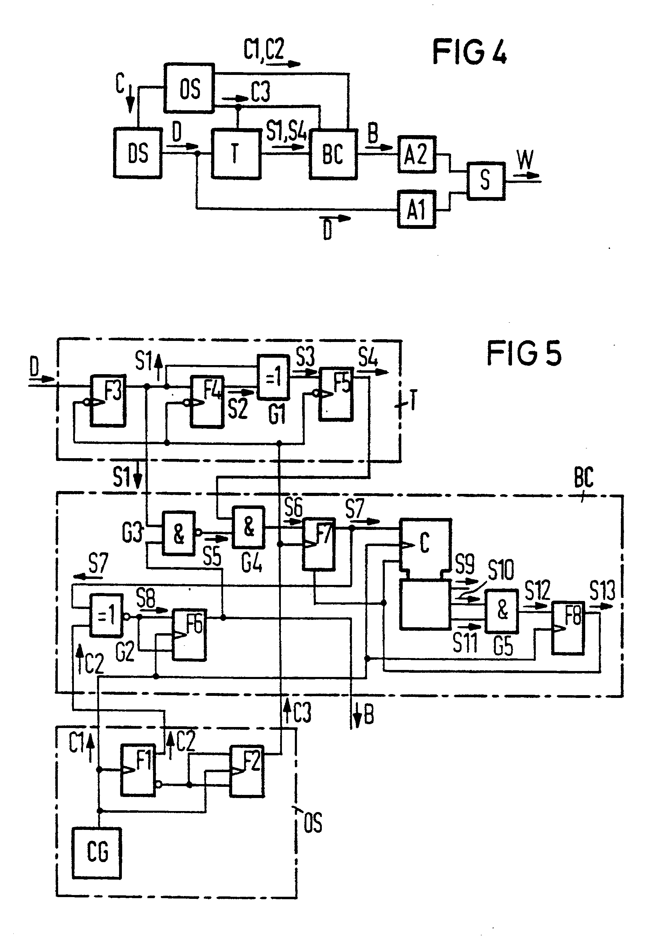

Das in FIG 4 dargestellte Blockschaltbild zeigt eine Anordnung zum Erzeugen der Vormagnetisierungssignale B und der Schreibsignale W, wie sie in FIG 3 dargestellt sind.

Ein Oszillator OS erzeugt Taktimpulse C und C1 bis C3, die einer Datenquelle DS, die die Datensignale D erzeugt, einem Flankendetektor T und einer Steuereinheit BC zugeführt werden. Die Datensignale D werden über einen ersten Verstärker A1 einem Summierkreis S zugeführt, der die Schreibsignale W nach der Addition der Vormagnetisierungssignale B erzeugt, die über einen zweiten Verstärker A2 dem Summierkreis S zugeführt werden. Die Schreibsignale W werden über einen nicht dargestellten Schreibverstärker einem magnetischen Schreibkopf zugeführt.

Die Datensignale D werden auch dem Flankendetektor T zugeführt, der mit der Steuereinheit BC verbunden ist und der die Flanken der Datensignale D ermittelt, um die Erzeugung der Vormagnetisierungssignale B der Steuereinheit BC durch Signale S1 und S4 zu steuern.

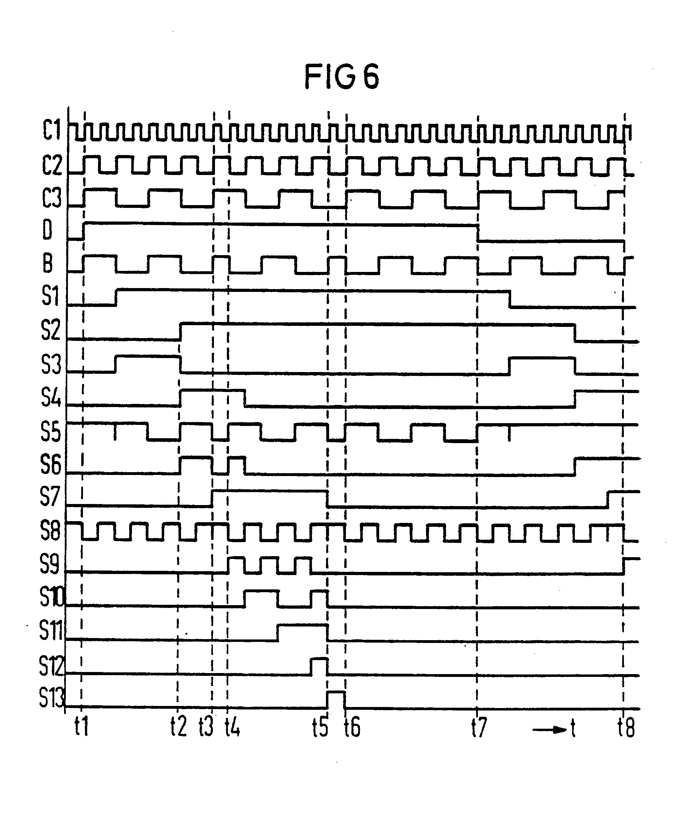

Das in FIG 5 dargestellte Schaltbild zeigt den Flankendetektor T, die Steuereinheit BC und den Oszillator OS und die FIG 6 zeigt Signale an verschiedenen Punkten dieser Baueinheiten.

Der Oszillator OS erzeugt unter Verwendung eines Taktimpulsgebers CG und Flipflops F1 und F2 die Taktimpulse C1 bis C3 und erzeugt nach einer weiteren Fequenzteilung, die nicht dargestellt ist, die der Datenquelle DS zugeführten Taktsignale C. Die Taktimpulse C1 sind hochfrequente Taktimpulse und ihre Folgefrequenz wird zweimal durch die Flipflops F1 und F2 durch zwei geteilt, um die Taktimpuls C2 und C3 zu erzeugen.

Der Flankendetektor T empfängt die Datensignale D und erzeugt durch zwei Flipflops F3 und F4 verzögerte Datensignale S1 und S2 und mittels eines EXOR-Gatters G1 nach jeder Flanke der Datensignale D einen Flankenimpuls S3, der mittels eines Flipflops F5 durch die Taktsignale C3 übernommen wird, um ein Flankensignal S4 zu erzeugen. Die Vormagnetisierungssignale B entsprechen normalerweise den Taktsignalen C3 und werden aus den Taktsignalen T2 erzeugt, die über ein EXOR-Gatter G2 einem invertierenden Ausgang einem Flipflop F6 zugeführt werden, an dessen Takteingang die Taktimpulse C1 anliegen.

Wenn nach dem Zeitpunkt t1 in FIG 6, bei dem das Datensignal D seinen Binärwert ändert, zum Zeitpunkt t2 das Flankensignal S4 erzeugt wird, erzeugt ein UND-Gatter G4 unter Verwendung eines von einem NAND-Gatter G3 abgegebenen Signals S5 ein Signal S6, das zum Zeitpunkt t3 ein Flipflop F7 setzt. Ein Signal S7 an dem Ausgang dieses Flipflops F7 wird einerseits einem Eingang des EXOR-Glieds G2 zugeführt und zum Zeitpunkt t4 wird der Impuls des Vormagnetisierungssignals B beendet, da die Phase des Taktsignals C2 durch das Signal S7 in dem EXOR-Glied G2 geändert wurde, wie aus dem Signal S8 ersehen werden kann. Somit wird zwischen den Zeitpunkten t3 und t4 die Pulsdauer des Vormagnetisierungssignals B verkürzt.

Das Signal S7 gibt auch einen Zähler C frei, der die Taktsignale C1 zählt. Wenn der Zähler einen Zählerstand 6 erreicht, erzeugen Signale S10 und S11 mittels eines UND-Glieds G5 ein Signal S12, das ein Flipflop F8 setzt. Ein Signal S13 am Ausgang des Flipflops F8 setzt das Flipflop F7 zurück, so daß das Signal S7 seinen Binärwert ändert und durch das EXOR-Glied G2 wird die Phase des Taktsignals C2 zum Zeitpunkt t5 erneut geändert. Deshalb wird zum Zeitpunkt t6 die Pulsdauer des Vormagnetisierungssignals B wieder beendet.

Durch die Veränderung der Pulsdauern der Vormagnetisierungssignale B zwischen den Zeitpunkten t3 und t4 bzw. t5 und t6 ist die Phase des Vormagnetisierungssignals B zum Zeitpunkt t7 entgegengesetzt zu der des Vormagnetisierungssignals B zum Zeitpunkt t1 und damit haben zu den Zeitpunkten t1 und t7 die Flanken der Vormagnetisierungssignale B dieselben Richtungen wie die Flanken der Datensignale D

Zwischen den Zeitpunkten t7 und t8 wiederholt sich ein ähnlicher Vorgang wie zwischen den Zeitpunkten t1 und t4, jedoch wird, da das Datensignal D den entgegengesetzten Binärwert hat, nicht die Pulsdauer, sondern die Pulspause verkürzt.

**Patentansprüche**

1.  Verfahren zum Aufzeichnen von digitalen Daten auf einen magnetischen Aufzeichnungsträger unter Verwendung von die digitalen Daten darstellenden binären Datensignalen (D) und Vormagnetisierungssignalen (B), deren Periodendauern wesentlich kleiner sind als die kürzesten Periodendauern der Datensignale, wobei die Flanken der Vormagnetisierungssignale und die der Datensignale aufsynchronisiert werden, die Datensignale und die Vormagnetisierungssignale einander überlagert und einem magnetischen Schreibkopf zugeführt werden, **dadurch gekennzeichnet,** daß den Datensignalen (D) und den Vormagnetisierungssignalen (B) gemeinsam ein höherfrequentes Taktraster (C) derart zugrundegelegt wird, daß Flanken der Daten und der Vormagnetisierungssignale gleichzeitig, gegebenenfalls aber mit unterschiedlicher Richtung auftreten und daß in diesem Fall die Periodendauern einer Mehrzahl der nach einem synchronen Flankenwechsel auftretenden Magnetisierungssignale einerseits um einen Gesamtbetrag von einer halben nominalen Periodendauer verkürzt werden, dabei andererseits aber die Summen der Pulsdauern und -pausen zwischen den Flankenwechseln der Datensignale gleich bleiben.

2. Verfahren nach Anspruch 1, **dadurch gekennzeichnet,** daß zwischen zwei aufeinanderfolgenden Flanken der Datensignale (D) mit einem ersten bzw. zweiten Binärwert die Pulsdauern oder die Pulspausen der Vormagnetisierungssignale (B) mit dem ersten bzw. zweiten Binärwert verkürzt werden.

3. Verfahren nach Anspruch 1 oder 2, **dadurch gekennzeichnet,** daß bei einer Verkürzung der zeitlichen Abstände zwischen jeweils zwei aufeinanderfolgenden Flanken von n Vormagnetisierungssignalen (B) jeder Abstand um den n-ten Teil der halben Periodendauer der Vormagnetisierungssignale (B) verkürzt wird.

4. Verfahren nach einem der Ansprüche 1 bis 3, **dadurch gekennzeichnet,** daß bei einer Verkürzung der zeitlichen Abstände zwischen jeweils zwei aufeinanderfolgenden Flanken von zwei Vormagnetisierungssignalen (B) jeder Abstand um die Hälfte der halben Periodendauer der Vormagnetisierungssignale (B) verkürzt wird.

5. Verfahren nach einem der Ansprüche 1 bis 4, **dadurch gekennzeichnet,** daß die Vormagnetisierungssignale (B), bei denen die zeitlichen Abstände zwischen ihren Flanken verkürzt werden, innerhalb der Datensignale möglichst gleichmäßig verteilt sind.

6. Anordnung zur Durchführung des Verfahrens nach Anspruch 1, bei der von einer Datenquelle (DS) die Datensignale (D) und von einem gemeinsamen Taktgeber (OS) durch entsprechende Frequenzteilung den Datensignalen zugeordnete Taktsignale (C) längerer Periodendauer an die Datenquelle sowie den Vormagnetisierungssignalen (B) zugeordnete Taktsignale (z. B. C3 kürzerer Periodendauer) abgegeben werden und bei der die Datensignale und die Vormagnetisierungssignale über einen Summierkreis (S) dem magnetischen Schreibkopf zugeführt werden, **dadurch gekennzeichnet,** daß eine Steuereinheit (BC) vorgesehen ist, die unter Verwendung der Datensignale (D) und der Taktsionale (C1 bis C3) zwischen den Flanken der Datensignale (D) bei einer Mehrzahl von Vormagnetisierungssignalen (B) die zeitlichen Abstände zwischen jeweils zwei aufeinanderfolgenden Flanken der Vormagnetisierungssignale (B) um einen Gesamtbetrag verkürzt, der gleich ist der halben nominalen Periodendauer der Vormagnetisierungssignale (B).

7. Anordnung nach Anspruch 6, **dadurch gekennzeichnet,** daß der Steuereinheit (BC) ein Flankengenerator (T) vorgeschaltet ist, der die Datensignale (D) verzögert und der bei jeder Flanke der verzögerten Datensignale ein Flankensignal (S4) erzeugt und daß die Steuereinheit (BC) derart ausgebildet ist, daß sie jeweils während des Flankensignals (S4) und nach einer vorgegebenen Zeitdauer die zeitlichen Abstände zwischen jeweils zwei aufeinanderfolgenden Flanken der Vormagnetisierungssignale (B) verkürzt.

8. Anordnung nach Anspruch 7, **dadurch gekennzeichnet,** daß die Steuereinheit (BC) einen Zähler (C) enthält, der durch Zählen von Taktsignalen (C1) die vorgegebene Zeitdauer festlegt.

9. Anordnung nach Anspruch 7 oder Anspruch 8, **dadurch gekennzeichnet,** daß die Steuereinheit (BC) ein Äquivalenzglied (G2) enthält, das zu Beginn und am Ende der vorgegebenen Zeitdauer die Phase von Taktsignalen (C2) um 180° verändert und daß dem Äquivalenzglied (G2) ein Flipflop (F6) nachgeschaltet ist, dessen Steuereingänge mit dem Ausgang des Äquivalenzglieds (G2) verbunden sind und das an seinem Ausgang die Vormagnetisierungssignale (B) abgibt.

**Claims**

1. A method of recording digital data on a magnetic recording support, using binary data signals (D), which represent the digital data, and premagnetisation signals (B), the periods of which are much shorter than the shortest period of the data signals, the flanks of the premagnetisation signals and those of the data signals being synchronised, the data signals and the premagnetisation signals being superimposed and fed to a magnetic write head, characterised in that a higher-frequency clock raster (C) is jointly used as a basis for the data signals (D) and the premagnetisation signals (B) in such manner that flanks of the data signals and of the premagnetisation signals occur simultaneously, although possibly in different directions, and that in that case the periods of a plurality of magnetisation signals occurring after a synchronous flank change, on the one hand, are shortened by a total amount equal to half the nominal period while, on the other hand, the sums of the pulse durations and pulse intervals between the flank changes of the data signals remain the same.

2. A method according to Claim 1, characterised in that between two consecutive flanks of the data signals (D) having a first and second binary value the pulse durations or the pulse intervals of the premagnetisation signals (B) having the first and second binary values are shortened.

3. A method according to claim 1 or 2, characterised in that on a shortening of the time intervals between each two consecutive flanks of n premagnetisation signals (B) each time interval is shortened by the nth part of half the period of the premagnetisation signals (B).

4. A method according to any one of Claims 1-3, characterised in that on a shortening of the time intervals between each two consecutive flanks of two premagnetisation signals (B) each time interval is shortened by half of half the period of the premagnetisation signals (B).

5. A method according to any one of Claims 1-4, characterised in that the premagnetisation signals (B) whose time intervals between their flanks are shortened are distributed as uniformly as possible within the data signals.

6. Apparatus for performing the method according to Claim 1, in which a data source (DS) delivers the data signals (D) and a common clock (OS) by appropriate frequency division delivers to the data source longer-period clock signals (C) associated with the data signals, and clock signals (e.g. C3 of shorter period) associated with the premagnetisation signals (B) and in which apparatus the data signals and the premagnetisation signals are fed to the magnetic write head via a summation circuit (S), characterised in that a control unit (BC) is provided which, using the data signals (D) and the clock signals (C1-C3), between the flanks of the data signals (D) in the case of a plurality of premagnetisation signals (B) shortens the time intervals between each two consecutive flanks of the premagnetisation signals (B) by a total amount equal to half the nominal period of the premagnetisation signals (B).

7. Apparatus according to Claim 6, characterised in that a flank generator (T) is disposed upstream of the control unit (BC) and delays the data signals and generates a flank signal (S4) on each flank of the delayed data signals and in that the control unit (BC) is so constructed that during the flank signal (S4) and after a predetermined duration it in each case shortens the time intervals between each two consecutive flanks of the premagnetisation signals (B).

8. Apparatus according to Claim 7 characterised in that the control unit (BC) contains a counter (C) which sets the predetermined duration by counting clock signals (C1).

9. Apparatus according to Claim 7 or 8 characterised in that the control unit (BC) contains an equivalence element (G2) which alters the phase of clock signals (C2) by $180°$ at the beginning and end of the predetermined duration and in that the equivalence element (G2) is followed by a flip-flop (F6), the control inputs of which are connected to the output of the equivalence element (G2) and which delivers the premagnetisation signals (B) at its output.

## Revendications

1. Procédé pour enregistrer des informations numériques sur un support d'enregistrement magnétique, en utilisant des signaux de données (D) binaires représentant les données numériques et des signaux de prémagnétisation (B), dont la durée de période est sensiblement inférieure aux plus courtes durées de période des signaux de données, les flancs des signaux de prémagnétisation et ceux des signaux de données étant synchronisés, les signaux de données et les signaux de prémagnétisation étant superposés les uns aux autres et amenés à une tête d'écriture magnétique, caractérisé en ce que les signaux de données (D) et les signaux de prémagnétisation (B) prennent conjointement pour base un balayage de synchronisation (C) de fréquence plus élevée, de façon que les flancs des données et des signaux de prémagnétisation se manifestent simultanément, mais, le cas échéant, avec des signes différents, et que, dans ce cas, les durées de période d'une pluralité de signaux de magnétisation survenant suivant une alternance synchrone de flancs, d'une part, soit raccourcie d'une valeur totale d'une demi-durée de période nominale, et qu'alors, d'autre part, les sommes des durées et des pauses de pulsation entre les alternances de flancs des signaux de données restent identiques.

2. Procédé selon la revendication 1, caractérisé en ce qu'entre deux flancs successifs des signaux de données (D) présentant une première, respectivement, une seconde valeur binaire, les durées de pulsation ou les pauses de pulsation des signaux de prémagnétisation (B) sont raccourcies, à l'aide de la première, respectivement de la deuxième valeur binaire,.

3. Procédé selon la revendication 1 ou 2, caractérisé en ce que, lors d'un raccourcissement des intervalles de temps entre chaque fois deux flancs successifs de n signaux de prémagnétisation (B), chaque intervalle est raccourci de la nième partie de la demi-durée de période des signaux de prémagnétisation (B).

4. Procédé selon l'une des revendications 1 à 3, caractérisé en ce que, lors d'un raccourcissement des intervalles de temps entre, chaque fois, deux flancs successifs de deux signaux de prémagnétisation (B), chaque intervalle est raccourci de la moitié de la demi-durée de période des signaux de prémagnétisation (B).

5. Procédé selon l'une des revendications 1 à 4, caractérisé en ce que les signaux de prémagnétisation (B), pour lesquels les intervalles de temps entre leurs flancs sont raccourcis, sont répartis aussi régulièrement que possible à l'intérieur des signaux de données.

6. Dispositif pour mettre en oeuvre le procédé selon la revendication 1, dans lequel, depuis une source de données (D), les signaux de données (D), et, depuis un cadenceur (OS) commun, grâce à une division de fréquence correspondante, des signaux de synchronisation (C), de durée de période plus longue, associés aux signaux de données, sont envoyés à la source de données, ainsi que sont envoyés des signaux de synchronisation (par exemple C3, de plus courte durée de période) associés aux signaux de prémagnétisation (B), et pour lequel les signaux de données et les signaux de prémagnétisation sont amenés à la tête d'écriture magnétique, par l'intermédiaire d'un circuit sommateur (S), caractérisé en ce qu'est prévue une unité de commande (BC), qui, en utilisant les signaux de données (D) et les signaux de synchronisation (C1 à C3), raccourcit entre les flancs des signaux de données (D), pour une pluralité de signaux de prémagnétisation (B), les intervalles de temps entre, chaque fois, deux flancs successifs des signaux de prémagnétisation (B), d'une valeur totale qui est égale à la demi-durée de période nominale des signaux de prémagnétisation (B).

7. Dispositif selon la revendication 6, caractérisé en ce qu'en amont de l'unité de commande (BC) est mis en circuit un générateur de flancs (T), qui retarde les signaux de données et produit, pour chaque flanc des signaux de données retardés, un signal de flanc (S4), et l'unité de commande (BC) est réalisée de façon que, chaque fois, pendant le signal de flanc (S4) et après une durée prédéterminée, elle raccourcit les intervalles de temps entre, chaque fois, deux flancs successifs des signaux de prémagnétisation (B).

8. Dispositif selon la revendication 7, caractérisé en ce que l'unité de commande (BC) contient un compteur (C) qui fixe, par comptage des signaux de synchronisation (C1), les intervalles de temps prédéterminés.

9. Dispositif selon la revendication 7, caractérisé en ce que l'unité de commande (BC) contient un organe d'équivalence (G2), qui, au début et à la fin de la durée prédéterminée, modifie de 180° la phase des signaux de synchronisation (C2), et en aval de l'organe d'équivalence (G2) est mise en circuit une bascule (F6), dont les entrées de commande sont reliées à la sortie de l'organe d'équivalence (G2) et qui envoie à sa sortie les signaux de prémagnétisation (B).

# FIG 1

# FIG 2

# FIG 3

EP 0 262 605 B1

FIG 4

FIG 5

9

# FIG 6